Europäisches Patentamt

**European Patent Office**

**Office européen des brevets**

(11) Numéro de publication: **0 287 409 B1**

(12) **FASCICULE DE BREVET EUROPEEN**

(45) Date de publication de fascicule du brevet: **17.06.92**   (51) Int. Cl.⁵: **G06F 15/72**

(21) Numéro de dépôt: **88400600.8**

(22) Date de dépôt: **15.03.88**

(54) **Procédé de calcul et de représentation d'images de vues d'un objet.**

(30) Priorité: **03.04.87 FR 8704728**

(43) Date de publication de la demande:
**19.10.88 Bulletin  88/42**

(45) Mention de la délivrance du brevet:
**17.06.92 Bulletin  92/25**

(84) Etats contractants désignés:
**DE GB NL**

(56) Documents cités:

**IEEE TRANSACTIONS ON MEDICAL IMAGING, vol. MI-5, no. 1, mars 1986, pages 45-47, IEEE, New York, US; K.H. HÖHNE et al.: "Shading 3D-images from CT using gray-level gradients"**

**ANGEWANDTE INFORMATIK/APPLIED INFORMATICS, vol. 28, no. 4, avril 1986, pages 151-156, Friedr. Vieweg & Sohn Verlagsgesellschaft mbH, Braunschweig, DE; H. MÜLLER: "Erzeugung realistisch wirkender Computergrafik aus komplexen Szenen durch Strahlverfolgung"**

(73) Titulaire: **GENERAL ELECTRIC CGR S.A.**
**100, rue Camille-Desmoulins**
**F-92130 Issy les Moulineaux(FR)**

(72) Inventeur: **Trousset, Yves Cabinet Ballot-Schmit**
**84, Avenue Kléber**
**F-75116 Paris(FR)**
Inventeur: **Schmitt, Francis Cabinet Ballot-Schmit**
**84, Avenue Kléber**
**F-75116 Paris(FR)**

(74) Mandataire: **Schmit, Christian Norbert Marie et al**
**Cabinet Ballot-Schmit 7, rue Le Sueur**
**F-75116 Paris(FR)**

## Description

La présente invention est due à la collaboration du LABORATOIRE IMAGE DE L'ECOLE NATIONALE SUPERIEURE DES TELECOMMUNICATIONS. Elle a pour objet un procédé de calcul et de représentation d'images de vues d'un objet. Elle trouve son application dans des domaines variés où la visualisation est nécessaire. Elle trouve en particulier une application dans le domaine médical où, pour des raisons de diagnostic, des praticiens sont intéressés à la connaissance des structures internes tissulaires de corps de patients sous examen. L'invention sera décrite dans un tel contexte sans qu'on puisse y voir toutefois une quelconque restriction à ce contexte.

Il est connu dans le domaine médical différentes techniques d'investigation à l'intérieur des corps humains, en vue de donner une représentation des structures internes tissulaires des corps étudiés. On connaît notamment la tomodensitométrie par rayons X, l'imagerie par résonance magnétique nucléaire, la gammagraphie, et l'échographie. Dans toutes ces techniques, et en particulier dans la première, on sait représenter des images de coupes, selon des plans de coupe déterminés, des corps étudiés. Pour fixer les idées un tomodensitomètre à rayons X comporte un générateur de rayons X qui émet un faisceau plat (mince) de rayons X en direction d'un multidétecteur, maintenu en regard de ce générateur. Un corps à étudier est placé, sa dimension longitudinale étant transverse au plan du rayonnement, entre ce générateur et ce multidétecteur. On fait ensuite tourner l'ensemble générateur-multidétecteur autour du corps en soumettant, pour une pluralité d'angles d'incidence, une tranche du corps à des irradiations successives. A chaque irradiation on mesure le signal détecté par le multidétecteur. Et avec la série des mesures correspondant à la pluralité des incidences on peut reconstruire une image de la tranche selon des procédés de reconstruction d'image connus.

Pour connaître l'architecture des structures internes tissulaires, il convient d'explorer une troisième dimension. En pratique on déplace le corps longitudinalement par rapport à l'ensemble générateur-multidétecteur, et on recommence l'opération pour une tranche voisine de la précédente. On procède ainsi de suite jusqu'à la collection des images, empilées les unes sur les autres, soit elle-même suffisante pour permettre la représentation de coupes du corps selon des directions de coupe variées. En effet le mode d'acquisition décrit permet de représenter immédiatement des coupes transverses (grossièrement perpendiculaires à la colonne vertébrale du patient). On peut ensuite pélever dans chaque image des tranches successives, des lignes d'image et les recombiner ensemble pour créer des coupes frontales (parallèles au dos du patient) ou encore sagittales (perpendiculaires au dos du patient). On peut même présenter des coupes obliques avec un choix judicieux de lignes d'image dans chacune des images successives.

On peut montrer que ce type de représentation est aussi accessible avec chacune des trois autres méthodes évoquées. Pour le mener à bien il suffit de disposer d'un ensemble d'informations représentatives d'un phénomène physique, respectivement la densité radiologique, la susceptibilité à la résonance nucléaire, le taux de vascularisation, ou le pouvoir réflecteur des ultrasons, et que ces informations soient affectées à des coordonnées de régions de l'espace ainsi soumis à l'expérimentation. L'ensemble de ces informations est défini par un terme consacré : un volume numérique. Le mot volume se réfère à la distribution spatiale de régions ou d'éléments de volume dans le corps soumis à l'examen (ces éléments de volume possèdent des coordonnées à trois dimensions x y z); le mot numérique est représentatif de l'information physique elle même : en tomodensitométrie par exemple il est représentatif du signal mesuré par le multidétecteur. Dans la suite de l'exposé on admettra que la résolution spatiale du volume numérique est la même selon les trois directions d'exploration de l'espace. Cette condition n'est cependant pas nécessaire à l'invention. De plus elle est de toutes façons facile à satisfaire par traitement d'interpolation entre les informations physiques d' éléments de volume voisins dans le volume étudié.

Les images ainsi présentées ont cependant l'inconvénient d'être des images de coupe. En effet les coupes sont contraignantes parce que leur lecture nécessite, de la part du lecteur, une interprétation à priori. De sorte que la signification d'une coupe n' apparait à ce lecteur que comme une vérification de l'idée qu'il s'en fait au préalable. Outre que les capacités d'interprétation nécessitent un grand apprentissage, il est des sciences, en particulier la résonance magnétique nucléaire, où compte tenu du mode nouveau d'investigation on ne sait pas toujours à quelle image on doit aboutir et a fortiori, pas comment on va pouvoir l'interpréter. Aussi, plutôt que de représenter des coupes il a alors été imaginé de présenter des vues. Il a ainsi été imaginé de présenter des structures internes comme on les verrait si les corps étudiés avaient été disséqués. La capacité d'interprétation et la compétence nécessaire pour interpréter une vue sont bien moindres que celles nécessaires pour interpréter une coupe. La compréhension du comportement des structures présentes dans les coupes est alors bien meilleure. Le spécialiste n'est plus obligé de reconstruire mentalement ce comportement.

En théorie la représentation de vues a déjà été étudiée. Elle comporte deux opérations principales : premièrement une segmentation, deuxièmement une visualisation proprement dite. Connaissant un volume numérique donné, la segmentation part du principe qu'un objet (une structure interne à ce volume numérique), est déterminé par l'ensemble des lieux des éléments de volume de ce volume où l'information physique mesurée a des caractéristiques données. Pour simplifier, en tomodensitométrie, on peut schématiquement admettre que les os se différencient par exemple du reste des tissus par une densité radiologique supérieure . Il est alors possible de discriminer dans le volume numérique l'ensemble des éléments de volume pour lesquels la densité radiologique mesuré est supérieure à un seuil. Plus particulièrement un objet pourra être défini par une valeur de son information physique appartenant à une plage de valeurs situées de part et d'autre d'une valeur nominale.

Les images des coupes sont généralement élaborées par des ordinateurs, et le contenu de ces images peut être stocké dans les mémoires de cet ordinateur. Ces mémoires peuvent être organisées en plans mémoire représentatifs de chacune des images , logiquement associés les uns aux autres pour constituer un volume mémoire correspondant au volume numérique étudié. Il est facile par un test de déterminer quelles sont les adresses des cellules mémoires, représentatives des éléments du volume numérique (et donc d'un objet spécifique dans le volume étudié dans le corps), dans lesquelles la grandeur de l'information physique stockée appartient à la plage en question. La segmentation, c'est-à-dire la détermination de l'image virtuelle de l'objet à représenter est terminée à ce stade.

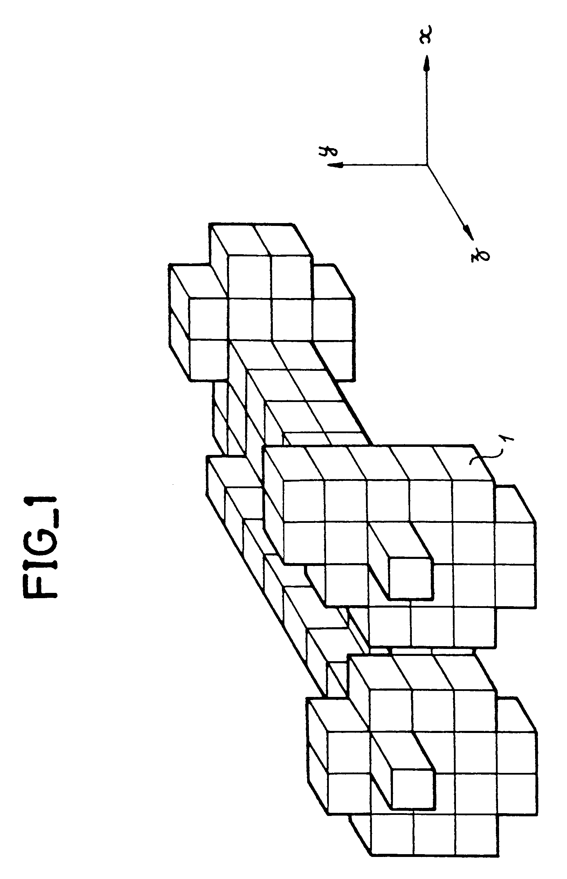

La visualisation s'effectue ensuite selon des techniques mettant en jeu la science des éclairements. Elle est appliquée à l'objet segmenté dont on connaît le volume et dont on peut connaître la forme géométrique c'est-à-dire la surface. Dans un premier temps la surface de cet objet est appréhendée, par exemple, par une pluralité de facettes reliant entre eux les éléments de volume situés à la limite, au bord, de l'objet segmenté. Ensuite ces facettes sont affectées d'une luminosité. Cette luminosité est représentative d'un éclairement qu'elles seraient susceptibles de recevoir et de restituer compte tenu de leur orientation. Enfin, dans l'image de la vue, des éléments de surface de l'image sont consacrés aux éléments de volume visibles (en fonction d'un point de vue donné), et ces éléments de surface sont affectés d'une luminosité correspondant à la luminosité des facettes des éléments de volume visibles. A titre indicatif la figure 1 donne une image schématique d'un tel volume segmenté. Profitant de la décomposition matricielle à trois dimensions (selon trois axes orthogonaux de l'espace) de l'objet segmenté, on peut utiliser directement les facettes telles que 1 des éléments de volume cubiques du volume segmenté comme surfaces éclairées et réfléchissantes d'une lumière d'éclairement. Cette solution, qui présente intuitivement une grande simplicité du traitement du signal d'éclairement du fait du faible nombre envisageable des surfaces éclairées, présente cependant un inconvénient : elle n'est susceptible de donner des vues que d'un contour artificiel, différent du contour réel, du fait que les normales aux facettes sont estimées par rapport aux trois axes cartésiens de description de cet objet (x,y,z). D'autres techniques de visualisation plus performantes sont envisageables : elles sont toutes basées sur le même principe. La définition des facettes y est seulement plus précise, les possibilités d' orientation de facettes n'y sont pas limitées, les images des vues présentées sont moins grossières, mais elles sont aussi plus longues à calculer.

Pour simplifier les calculs des images on a utilisé diverses méthodes. Par exemple une méthode a êtê inventée par MEAGHER D.J., elle est intitulée codage octree (ou, octree encoding) et elle a été divulguée dans un article "Efficient Synthetic Image Generation of Arbitrary 3-D Objects", publié dans IEEE COMPUTER SOCIETY CONFERENCE ON PATTERN RECOGNITION AND IMAGE PROCESSING en Juin 1982. Selon cette méthode une nouvelle présentation de la segmentation a été introduite. Chaque élément de volume y est considéré comme faisant partie d'un groupe de huit éléments de volume qui lui sont adjacents. Chaque groupe y est considéré comme faisant partie d'un ensemble de huit groupes adjacents à ce groupe, et ainsi de suite jusqu'à la complète définition du volume numérique à étudier. Les éléments dans les groupes, les groupes dans les ensembles et... sont ensuite affectés d'un poids binaire dépendant de leur appartenance ou non à l'objet segmenté. Cette structure des données a l'avantage de permettre une réalisation simple d'un certain nombre d'algorithmes, et notamment d'algorithmes de visualisation, en utilisant des ordres de priorité sur les données.

On connaît aussi par le document IEEE Transactions on Medical Imaging Vol, MI-5, NO. 1, March 1986, un procédé de segmentation d'un type différent où les éléments de volume sont scrutés à partir d'une direction d'observation. Cependant, quand la segmentation n'est localement pas correcte, on ne sait pas comment l'améliorer.

Toutes les méthodes de représentation évoquées présentent un inconvénient : elles supposent que le contour présenté est un contour vrai et nettement défini. Or les informations physiques réelles, en particulier dans le domaine médical, sont entachées de bruits. Ces bruits, qui peuvent être de mesure ou de traitement, sont quelquefois suffisamment forts pour exclure de l'objet segmenté certains éléments de volume qui en fait lui appartiennent. Il en résulte qu'à l'endroit de cet exclusion, si eue se produit à la surface de l'objet segmenté (celle que l'on veut représenter), une désorientation des facettes survient qui tient compte du trou ainsi constitué. Et dans l'image globale visualisée certaines parties peuvent apparaître nettement tandis que la signification d'autres parties peut être moins claire. Il est alors impossible de traiter localement l'image pour améliorer ou modifier les caractéristiques de la segmentation ou de la représentation de cette image à l'endroit ou elle n'est pas claire. En effet toute modification des critères de segmentation (modification ou déplacement de la valeur de la plage) ou des critères de visualisation (définition des facettes) a des répercussions sur la totalité de l'image visualisée. Ce qui est une amélioration en un endroit de l'image peut devenir alors une perturbation en un autre endroit. Telle partie clairement délimitée dans une image précédente devient, après modification des critères, imprécise dans l'image nouvelle.

La présente invention a pour objet de remédier à ces inconvénients en attribuant, pendant la segmentation, à chacun des éléments de volume discriminé un paramètre. Ce paramètre dépend du mode d'exploration du volume numérique, et ce paramètre et ce mode d'exploration sont tels qu'un paramètre différent est affecté à chacun des éléments de volume différents de la surface de l'objet segmenté. Dans l'état de la technique, la segmentation s'opère de la manière suivante : on adresse les cellules mémoires de la mémoire, les unes après les autres, à un comparateur qui les trie selon un critère de segmentation. Le mode d'adressage de la mémoire de l'ordinateur est alors un mode dépendant de la technologie d'architecture de cet ordinateur. Par exemple l'adressage de la mémoire est fait cellule par cellule dans une ligne mémoire, ligne par ligne dans un plan mémoire, et plan après plan dans la mémoire. Dans l'invention le mode d'adressage de la mémoire ou, ce qui revient au même le mode d'exploration du volume numérique correspondant, n'est pas imposé par la technologie de l'ordinateur. Il dépend au contraire d'un processus spécifique. Ce processus spécifique est en particulier lié au lieu du point de vue d'où on est censé visualiser l'objet. Dans ces conditions, chaque élément de volume discriminé est muni d'un paramètre, dépendant d'une phase du mode d'exploration à l'issue de laquelle est élément de volume ainsi discriminé a été retenu. On peut ensuite se servir de ce paramètre pour modifier localement les critères de segmentation ou de représentation.

L'invention concerne donc un procédé de calcul et de représentation d'images de vues d'un objet, ledit objet étant déterminé, à l'intérieur d'un volume numérique, par un ensemble d'éléments de volume chargés, chacun, d'au moins une information physique dont la valeur est représentative de cette objet, procédé dans lequel

- on segmente le volume numérique par traitement numérique sur les valeurs des informations physiques des éléments de volume pour discriminer l'ensemble des éléments de volume de cet objet, et dans lequel on visualise une image d'une vue de cet objet segmenté à partir d'un point de vue donné, caractérisé en ce que
- la segmentation est effectuée en attribuant à chaque élément du volume segmenté un paramètre représentatif d'un mode d'exploration du volume numérique.

L'invention sera mieux comprise à la lecture de la description qui suit et à l'examen des figures qui l'accompagnent. Celles ci ne sont données qu'à titre indicatif et nullement limitatif de l'invention. Les figures montrent :

- figure 1 : une représentation schématique d'un volume segmenté selon l'état de la technique cité;
- figure 2 : un volume numérique et un mode particulier d'exploration de ce volume numérique correspondant à un mode particulier d'observation de ce volume ;
- figures 3a et 3b : une représentation schématique d'un critère préféré de segmentation ;
- figures 4a et 4b : différentes significations physiques possibles de critères de segmentation retenus ;
- figure 5 : l'effet dans le procédé de l'invention de la modification du point de vue à partir duquel est visualisé l'objet segmenté.

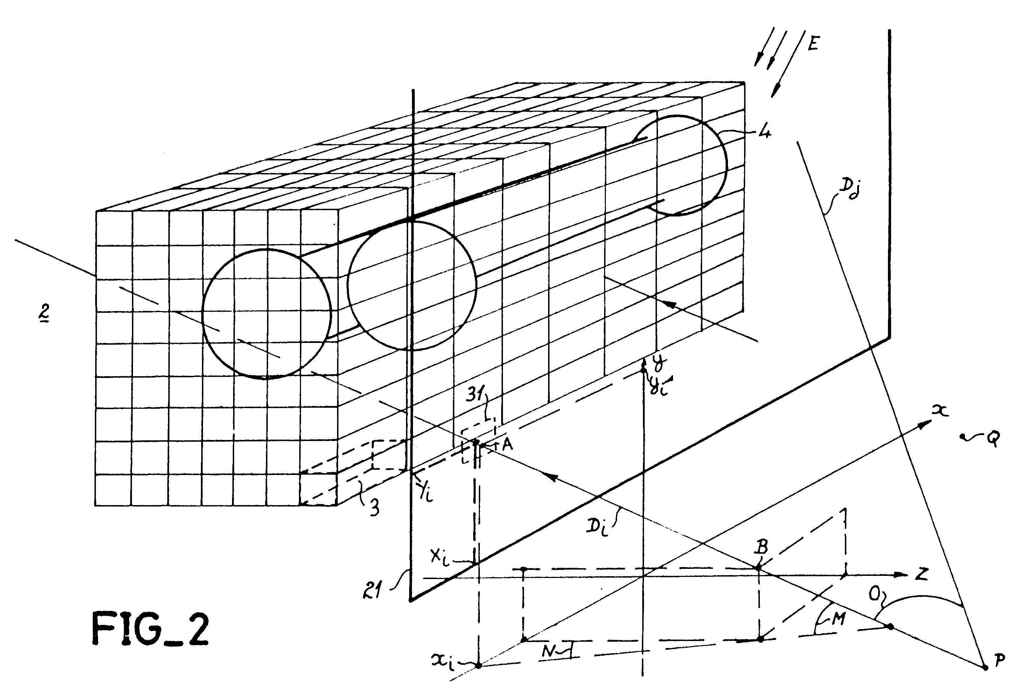

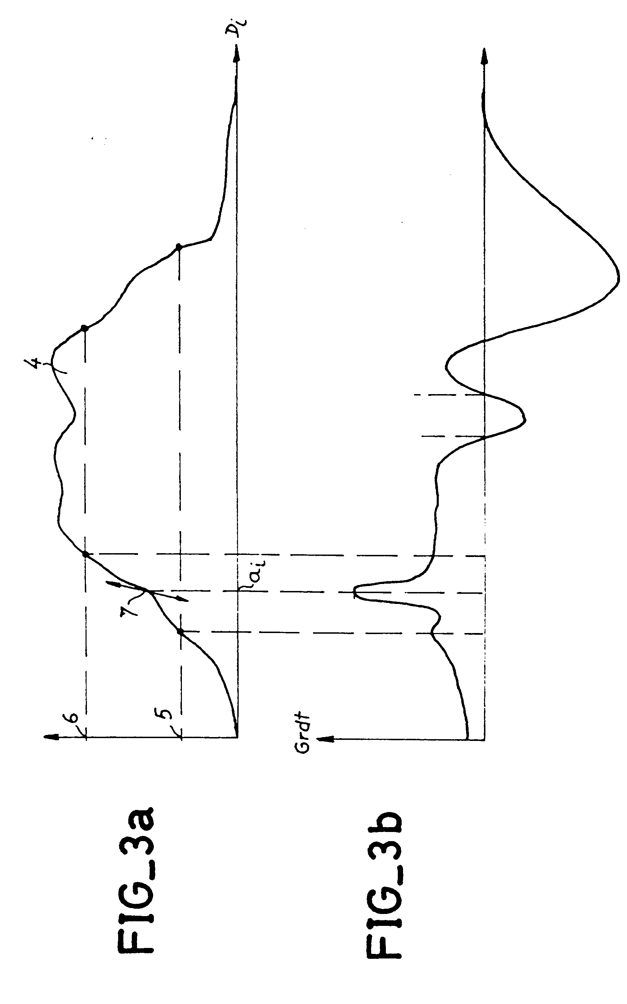

La figure 1 représente donc en perspective l'allure virtuelle d'un objet segmenté selon un procédé conforme à ceux connus dans l'état de la technique. On peut admettre qu'il représente schématiquement un os muni de ses apophyses. La figure 2 montre un volume numérique 2 contenant un ensemble d'éléments de volume tels que 3. Certains de ces éléments de volume, soulignés par un contour imprécis 4, sont chargés d'une information physique dont la valeur est représentative de leur appartenance à un objet particulier, par exemple tel que l'os de la figure 1. Par exemple la valeur des densités radiologiques des éléments de volume circonscrits par le contour 4 est susceptible d'appartenir à une plage de valeurs retenue comme critère de discrimination du volume 4 (figure 3a). A partir d'un objet 4 ainsi segmenté il est possible de procéder, d'une manière connue, à la représentation de cet objet. Une particularité de l'invention réside dans le mode d'exploration du volume numérique. En effet plutôt que de considérer les éléments de volume, ou encore les cellules mémoires correspondantes, d'une manière séquentielle organisée selon les trois axes de référence de ce volume, ou de cette mémoire, on peut au contraire décider d'explorer ce volume, cette mémoire, en étudiant la succession des éléments de volumes, des cellules mémoires, qui se situent le long d'une droite $D_i$ . On sait calculer l'équation d'une telle droite $D_i$ par rapport à un repère x, y, z, lié au volume numérique. Il est donc possible d'accéder successivement aux éléments de volume qui, par exemple sur le dessin de la droite vers la gauche, sont intersectés par cette droite.

Avec un ordinateur utilisé pour faire l'exploration du volume numérique, l'équation de la droite $D_i$ doit être remplacée par un calcul d'adresses des cellules mémoire correspondantes. Chaque adresse de cellules mémoire appartenant à la "droite" est reliée aux adresses des autres cellules mémoires appartenant aussi à cette "droite" par une relation de corrélation d'un type connu. Par exemple de telles corrélations sont décrites dans "Synthèse d'Image : Algorithmes Elémentaires dû à G. HEGRON et publié chez DUNOD INFORMATIQUE en 1985 à PARIS. Ou encore, on peut en trouver une description dans "Algorithm for Computer Control of a Digital Plotter", IBM System Journal, vol.4 n°1 1965, page 25 à 30, et du à J.E. BREHESENHAM. L'idée de ce dernier algorithme est la suivante : au lieu de calculer, avec des multiplications, les coordonnées de chaque point P + k.U le long de la droite passant par le point P et de vecteur directeur U, on fait un calcul incrémental utilisant seulement des additions en entier. Cela revient à déterminer un élément de volume suivant à partir d'un élément de volume déjà intersecté. Ces algorithmes ont l'intérêt de ne nécessiter qu'une arithmétique entière.

Sur la succession des cellules de mémoire ainsi adressées, ou ce qui revient au même, sur les éléments de volume correspondant, on peut effectuer une discrimination de la grandeur physique contenue à titre d'information. On peut par exemple décider de retenir comme cellule mémoire significative la cellule mémoire correspondant au premier élément de volume pour lequel le critère de discrimination est rempli. On dispose alors pour cet élément de volume, d'une part de son adresse dans la mémoire (qui est équivalente à sa position géographique dans le volume numérique), et d'autre part des paramètres directeurs de la droite $D_i$ qui a permis de déterminer cet élément de volume. Dans un espace à trois dimensions une droite est déterminée en deux points, par exemple A et B, par six coordonnées : trois coordonnées pour chaque point. Le paramètre ainsi affecté à l'élément de volume discriminé peut alors être un paramètre à six dimensions.

Dans une version simplifiée de l'invention toutes les droites $D_i$ d'exploration du volume numérique sont parallèles les unes aux autres. Ceci signifie que leurs angles directeurs M et N sont les mêmes pour toutes. Chaque droite peut alors être paramétrée simplement par les coordonnées $x_i$ $y_i$ de son point A de rencontre avec un plan x y de référence. Comme on le verra plus loin, chaque point de l'image à visualiser (chaque élément de volume retenu) peut alors n'être affecté que d'un paramètre à deux dimensions ($x_i$, $y_i$) tandis que l'image visualisée, elle, peut être affectée de deux autres dimensions du paramètre (M,N,) dépendant du mode d'observation de l'image visualisée. On verra plus loin que ce type d'exploration du volume numérique conduit à la représentation d'images axonométriques, c'est-à-dire en fausse perspective. Pour obtenir un effet de perspective il pourra être nécessaire de produire des droites $D_j$ convergeant en un point Q quelconque. Pour une telle représentation on peut montrer que le point Q doit se trouver à la position P où est censé se situer le point de vue de l'image représentée. Dans ce cas les droites $D_j$ convergent au point Q en un angle solide O. Dans cette version plus générale, les angles M N et O paramètrent la vue, tandis que les coordonnées $x_i$, $y_i$ paramètrent chaque élément de volume d'une manière plus spécifique. On peut aussi dire, cependant, que les paramètres M N et O paramètrent, eux également, les éléments de volume en question.

Les figures 3a et 3b montrent une manière préférée de réalisation de la segmentation de l'objet 4. Pour chacune des droites $D_i$, les informations contenues dans les éléments de volume peuvent être séquentiellement présentées à un comparateur qui détermine pour quelles adresses la valeur de cette information est contenue à l'intérieur d'une plage de valeurs 5-6. Le résultat de cette détermination peut conduire à considérer qu'avant l'adresse $a_i$ on n'est pas dans l'objet segmenté, mais que par contre après on y pénètre. La détermination exacte de l'adresse $a_i$ peut être rendue difficile par la nature bruitée du signal d'information physique au voisinage de la transition entre l'objet 4 et ce qui lui est extérieur ainsi que par l'allure plus ou moins nette de cette transition elle-même. On estime alors qu'en calculant le gradient de la grandeur physique chargée dans chaque élément de volume, appartenant à la droite $D_i$ et appartenant à la plage, et qu'en retenant l'élément de volume dont le gradient est maximum, point d'inflexion 7, on détermine avec une plus grande précision le lieu, l'adresse $a_i$, de l'élément de volume concerné (figure 3b). Dans le cas général, si la plage 5-6 est suffisamment fine, le nombre des adresses possibles pour $a_i$ est faible. Si ce nombre d'adresses est supérieur à un nombre donné, par exemple si la valeur supérieure 6 n'est même jamais rencontrée, ou si elle n' est rencontrée que très loin sur la droite $D_i$, on peut limiter le nombre des éléments de volume testés à une vingtaine. Là aussi on cherche l'adresse de l'élément de volume pour lequel le gradient de l'information est maximum. Il peut de plus arriver que le bruit soit important dans l'information mémorisée et que le gradient reste toujours faible. Dans ces conditions on peut choisir arbitrairement comme adresse d'élément de volume celle du premier rencontré et qui est chargé d'une information physique contenue dans la plage 5-6.

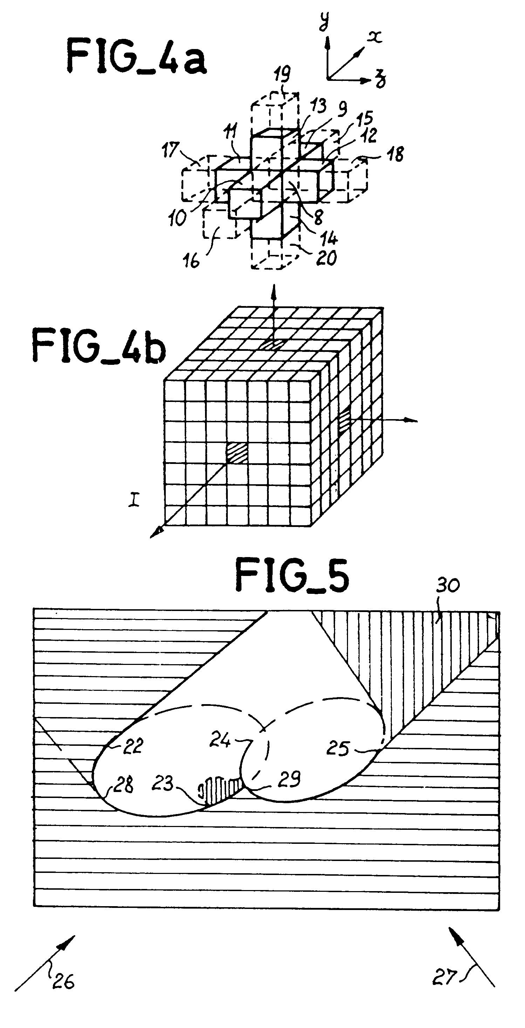

Le calcul du gradient en chaque élément de volume peut être fait simplement. Les figures 4a et 4b donnent des exemples de calcul de ces gradients. Soit un élément de volume 8 en cours d'évaluation du fait de son appartenance à une droite $D_i$ d'exploration du volume et du fait de la valeur de son information physique. Pour cet élément de volume 8 on connaît ses voisins directs 9-14 alignés selon les axes x y z de définition du volume numérique. Il est possible de calculer, à partir de ces voisins, le gradient : on évalue par exemple la somme des valeurs absolues des différences des informations physiques chargées dans les éléments de volume situés respectivement de part et d'autre de l'éléments de volume 8 sur chacun des axes du système de référence. On effectue le calcul de la valeur absolue de la différence des valeurs d'informations physiques chargées dans les éléments de volume respectivement 9 et 10, 11 et 12, et 13 et 14. L' élément de volume de la série des éléments de volume appartenant à la droite $D_i$ pour lequel cette somme est la plus haute être l'élément de volume retenu, c'est-à-dire peut être considéré comme appartenant à la surface de l'objet 4 à l'endroit de l'intersection de la droite $D_i$ avec cet objet 4. De préférence, le calcul de ces gradients est effectué selon une méthode du type de celles inventées par S.W. ZUCKER ("A THREE-DIMENSIONAL EDGE OPERATOR", IEEE PAMI, Vol. PAMI-3, N°3, May 1981, pp 324-331) ou par D.G. MORGENTHALER ("MULTIDIMENSIONAL EDGE DETECTION BY HYPERSURFACE FITTING, IEEE PAMI, Vol. PAMI-3, N°4, July 1981, pp 482-486).

Il peut cependant être intéressant de modifier le critère de segmentation. Par exemple au lieu de prendre les 6 éléments de volume directement voisins d'un élément de volume considéré, on peut recommencer le calcul sur un voisinage plus important. On peut par exemple aussi considérer les éléments de volume 15 à 20 marqués en pointillés autour de l'élément de volume 8. En effet toute opération de mesure d'un gradient s'assimile à une différence, à une opération de différenciation. En faisant disparaître la composante continue des informations cette différenciation rend le résultat très sensible au bruit. Il peut donc être judicieux de choisir en plus des éléments de volume éloignés (15 à 20), ou même de choisir d'une pondération, de certains éléments de volume voisins: éléments 9 à 20. La figure 4b suggère même qu'on peut procéder, pour le calcul du gradient, à l'évaluation de toutes les informations d'un nombre T d'éléments de volume voisins de l'élément de volume testé.

On conçoit alors, du calcul du simple dépassement d'un seuil à un calcul aussi complexe de gradient, que les temps d'occupation pour traitement dans un l'ordinateur vont croissant. On peut alors définir un protocole de discrimination du volume numérique. Par exemple, tant que l'adresse d'un premier élément de volume susceptible d'appartenir à l'objet 4 n'a pas été discriminée, on se contente d'une simple opération de comparaison à un seuil (5 ou 6). Dès que l'adresse d'un tel élément de volume est discriminée, on peut essayer le calcul du gradient avec les six voisins directs. Si ce calcul est insuffisamment performant, on peut envisager le calcul sur les six éléments voisins plus éloignés, ou même sur un voisinage plus large, déterminé en fonction du contexte local (contour très net ou plutôt transition douce ...). Le cas échéant on peut même passer à une composition plus globale à T éléments de volume voisins. Dans ce cas "T" peut même représenter l'algorithme lui-même de calcul du gradient.

Ce changement automatique de critère de segmentation, pour intéressant qu'il soit, présente cependant un inconvénient. En effet il est transparent pour l'observateur de l'image visualiée. Celui ci ne sait pas en définitive qu'elle est le critère exact qui a prévalu pour chacune des régions de l'image visualisée. L'image peut être nette partout, mais elle peut ne pas correspondre d'une manière certaine en chaque endroit à une même définition. Dans ces conditions, on peut préférer limiter le protocole au premier passage automatique : mesure du dépassement du seuil dans un premier temps, et calcul du gradient dès qu'une adresse d'un élément de volume susceptible d'appartenir à l'objet 4 a été discriminée. On se réserve par contre la possibilité d'associer à certaines parties de l'image une modification du critère de discrimination. En effet, après une première visualisation acquise dans des conditions normales, on peut remarquer quelles sont les parties de cette image dont les contours sont correctement déterminés et quelles sont les autres parties dont les contours ne le sont pas. On peut distinguer en effet sur un écran de visualisation 21 (figure 2) quelles sont les régions sur cet écran $X_i$ et $Y_i$ pour lesquelles la visualisation n'est pas claire. L'écran 21 d'un appareil (non représenté) de visualisation est ici fictivement placé entre le point de vue et la structure virtuelle à imager.

Il est immédiat que les coordonnées $Y_i$ et $X_i$ des lieux, sur cet écran, d'un défaut de l'image sont corrélés aux paramètres $x_i$ et $y_i$ des droites $D_i$ qui ont abouti aux éléments de volume concernés. Il est facile alors dans ces conditions de refaire la discrimination des éléments de volume situés sur 1′ ensemble des droites $D_i$ voisines et correspondant à ces lieux incorrectement déterminés, en modifiant le critère de discrimination. Autrement dit on effectue à nouveau la segmentation, mais avec un critère modifié, pour l'ensemble des droites $D_i$ concernées c'est-à-dire pour l'ensemble des éléments de volume paramétrés par les coefficient de ces droites. En définitive dans l'invention on ajoute ainsi une autre dimension générale au paramètre : cette dimension concerne les caractéristiques du critère de discrimination de l'objet segmenté. Cette dimension est par sa nature, elle aussi, représentative du mode d'exploration du volume numérique. On remarque à ce sujet que dans l'état de la technique décrit, tout l'objet segmenté était défini selon un mode d'exploration cellule-ligne-plan figé et selon un critère de segmentation commun. Il y était impossible de modifier localement les conditions de discrimination puisque l'on ne connaissait pas dans l'image visualisée à quelle position dans l'espace x,y,z, ou à quelle adresse exacte en machine appartenaient les éléments de volume, que l'on représentait et qui présentaient des défauts.

Le procédé de l'invention pourrait présenter un inconvénient du fait du mode d'accès particulier aux adresses des différents éléments de volume à évaluer, et qui appartiennent aux droites $D_i$. En effet ce mode d'adressage n'est pas aussi simple qu'un mode naturel d'adressage séquentiel comme on peut en disposer avec une lecture de la mémoire cellule-ligne-plan. Cet inconvénient est minime et, par contre, le procédé de l'invention permet de gagner du temps dès qu'on envisage de faire "tourner" l'objet visualisé devant un observateur qui regarde l'écran de visualisation 21. De plus, seules les parties utiles du volume numérique sont manipulées lors de la segmentation, puisqu'on s'arrête de parcourir ce volume dès qu'un point d'intersection satisfaisant est trouvé. On gagne ainsi en temps de calcul. En simplifiant, en prenant une visualisation axonométrique, le fait de faire tourner l'objet est équivalent à déplacer le point de vue P par rapport au volume numérique 2. Dans cette représentation en fausse perspective le point P est à l'infini et par conséquent l'angle de champ O dans lequel est contenu l'objet 4 est nul. Au cours de ce déplacement seuls changent les angles directeurs N et M communs à toutes les droites $D_i$.

Sur la figure 5 où le contour visible de l'objet 4 a été limité à des parties 22-23 et 24-25 contenues dans un plan de coupe, toute la partie hachurée horizontalement, et correspondant à une première direction 26 de vue, a déjà été testée dans le volume numérique et a déjà donné des informations selon lesquelles cette partie hachurée ne contenait aucune des parties du volume segmenté. Lors d'une deuxième visualisation, où le point de vue est déplacé selon 27, une grande partie du contour 28-23 et 29-25 est déjà connu. Il peut ne plus rester à explorer dans le volume numérique que des régions d'une part marginale (à droite de 23 et de 25), de l'objet segmenté et d'autre part extérieure (30) à cet objet segmenté. Ce faisant on constate que le point de vue de visualisation interfère dans l'invention comme un paramètre de détermination de l'objet segmenté. On peut ainsi limiter la segmentation du volume numérique à la partie qui se projette dans telle ou telle région de l'écran (c'est-à-dire la limiter à un cylindre généralisé). Mais on peut aussi limiter la segmentation à un sous-ensemble défini totalement par rapport à l'espace objet. Par exemple, si on connaît a priori la position approximative de l'objet, on peut se limiter à une sphère ou à un parallélépipède englobant cet objet. Dans l'état de la technique cité l'objet était segmenté une fois pour toutes, et le point de vue de visualisation ne dépendait que des opérations de représentation de l'objet segmenté. Sur le plan pratique, les parties communes aux visualisations orientées en 26 et 27 ont simplement, d'une visualisation à l'autre, leurs paramètres $x_i$ $y_i$ modifiés selon un algorithme. Cet algorithme est facile à calculer puisqu'on connaît les lieux des éléments de volume segmentés considérés et les équations des droites $D_i$ et $D'_i$ qui permettent de les atteindre d'un point de vue à l'autre.

La visualisation de l'image proprement dite se trouve avantageusement simplifiée avec le procédé de l'invention. En effet la théorie des éclairements comporte des lois, en particulier dans une modélisation dite de LAMBERT. Cette théorie est décrite en particulier dans "FUNDAMENTALS OF INTERACTIVE COMPUTER GRAPHICS" publiée par FOLEY J.D et VAN DAM A. chez ADDISON-WESLEY en 1982. Selon cette théorie, la lumière provenant d'une région de l'espace peut comporter trois composantes réflechies : une lumière dite ambiante, une lumière diffusée, et une lumière réfléchie spéculairement. La lumière ambiante émise par une facette ne dépend pas de l'orientation de cette facette. Dans une image cette composante intervient un peu comme une composante continue de luminosité de toute l'image. La lumière diffusée par une facette est une lumière émise pareillement dans toutes les directions par cette facette. Son intensité, dans toutes ces directions, dépend de l'angle d'incidence de la lumière qui a éclairé la facette. La lumière réfléchie spéculairement obéit grossièrement à une loi de réflexion de type miroir. Simplement un rayon lumineux d'éclairement ne se réfléchit pas en un rayon unique mais plutôt en un cône dont l'angle d'ouverture dépend de la nature spéculaire du matériau de la facette. Pour les deux dernières composantes on doit donc connaître l'orientation des facettes de l'objet segmenté pour effectuer les représentations des images des vues.

Dans l'état de la technique cité, à partir du volume segmenté on était conduit à déterminer une série de facettes visibles dont, pour la visualisation, on calculait la luminosité et donc pour laquelle il était nécessaire de connaître les normales à ces facettes. Deux types de calculs étaient donc à effectuer : la discrimination des parties visibles de l'objet segmenté puis le calcul des contributions lumineuses des facettes associés à ces parties (ce calcul des contributions comportant les calculs des normales). On peut se rendre compte que la technique de l'invention, qui utilise le calcul du gradient, permet d'aboutir directement à ces normales. En effet le gradient est par définition en un point d'une surface équipotentielle la normale à cette surface. Et ce gradient est connu avec ses trois composantes par rapport aux axes x y z. De sorte qu'on peut associer à ce gradient une surface élémentaire de facette qui lui est perpendiculaire.

Dans ces conditions il suffit d'attribuer à chaque élément de volume de la surface du volume segmenté une facette élémentaire dont, en définitive, on ne cherche pas particulièrement la forme (triangulaire, carrée, ...) mais dont on ne se préoccupe que de la normale. Avec cette normale on a directement les informations nécessaires pour le calcul de la luminosité de cette facette élémentaire attribuée. Aussi, connaissant une direction d'éclairement E (figure 2), et connaissant pour chaque élément de volume de la surface du volume segmentée la normale, il est possible d'évaluer la luminosité de chaque facette élémentaire visible d'un point de vue P. Dans l'image présentée, on attribue à chaque élément de surface 31 de cette image, de coordonnées $X_i$ et $Y_i$ la luminosité calculée de la facette correspondant à l'élément de volume segmenté qui a été discriminé sur la droite $D_i$ paramétrée par $x_i$ et $y_i$, $x_i$ et $y_i$ étant corrélés à $X_i$ et $Y_i$.

Un autre avantage de l'invention est aussi de donner accès directement aux éléments de volume de la surface du volume segmenté. En effet, figure 3a, si on considère qu'un élément de volume appartient à l'objet 4 dès que la valeur de son information physique est supérieure à un seuil 5 (en négligeant la valeur 6), on obtient l'ensemble des éléments de volume appartenant à l'objet 4 : on n'obtient pas la surface de cet objet 4. Il faut donc se livrer au calcul ultérieur de cette surface par élimination des éléments de volume contenus dans l'objet. Avec le procédé de l'invention où le mode d'exploration est un mode dirigé, on a accès directement aux éléments de volume les premiers rencontrés et qui sont significatifs c'est-à-dire à ceux qui sont justement à la surface de l'objet 4.

Enfin le paramètre caractérisant le mode exploratoire du volume numérique peut encore correspondre à autre chose. En effet, il est nécessaire d'éliminer les petites particules de bruit qui obstruent le passage des rayons d'exploration. On peut tenter de se baser sur le périmètre de ces particules. C'est-à-dire, on peut essayer de voir quels éléments de volume voisins ont des mêmes caractéristiques qu'un élément de volume discriminé. De proche en proche, on peut soit revenir rapidement au point de départ, on tourne autour de la particule de bruit, soit s'éloigner de l'élément de volume discriminé. Dans le premier cas, on est en presence d'un bruit, il faut continuer l'exploration de l'autre côté de la particule ; dans le deuxième cas on a abouti à la surface de l'objet segmenté. De cette manière, on donne simplement une cohérence spatiale à la surface de cet objet.

**Revendications**

1. Procédé de représentation (21) d'images de vues d'un objet (4), ledit objet étant déterminé, à l'intérieur d'un volume numérique (2), ce volume numérique étant constitué des cellules mémoires d'un ordinateur représentant, chacune, un des éléments de volume d'un volume, ces éléments de volume étant distribué spatialement selon des coordonnées (x,y,z), chaque cellule emmagasinant au moins une information physique dont la valeur est représentative d'une propriété physique de l'élément de volume correspondant de cet objet, procédé comprenant les étapes suivantes:
   - segmentation (fig 3a) du volume numérique en traitant numériquement les valeurs des informations physiques des cellules mémoires qui sont représentatives d'objet spécifique dans le volume,
   - visualisation (21) de l'image d'une vue de cet objet segmenté à partir d'un point de vue (P) donné la segmentation se faisant selon un mode d'exploration de la mémoire en adressant successivement les cellules de mémoires correspondant à des éléments de volume le long d'un rayon d'observation qui part du point de vue (P) et qui est contenu dans un angle d'observation
   caractérisé en ce que :

- pendant la segmentation chaque élément du volume segmenté est muni d'un paramètre ($x_i$ $y_i$) représentatif du rayon d'observation qui atteint cet élément de volume lors de l'exploration du volume numérique.

2. Procédé selon la revendication 2, caractérisé en ce que l'angle d'observation est nul, pour donner une représentation axonométrique de l'objet segmenté, et en ce que le paramètre de chaque élément représente les coordonnées de l'intersection avec un plan de référence (x,y) d'un rayon qui atteint cet élément.

3. Procédé selon la revendication 2, caractérisé en ce que le sommet (Q) de l'angle d'observation est situé au lieu supposé d'un point de vue pour donner une représentation en perspective de l'objet segmenté.

4. Procédé selon l'une quelconque des revendications 1 à 4, caractérisé en ce que la segmentation est effectuée en choisissant des critères (fig 3b) de segmentation dépendant, pour chaque élément de volume, du paramètre local ($x_i$, $y_i$, T) attribué à cet élément de volume.

5. Procédé selon l'une quelconque des revendications 1 à 5, caractérisé en ce que le critère de segmentation comporte la détermination d'une plage (5,6) des valeurs des informations physiques et la sélection des éléments de volume qui, dans une phase ($D_i$) du mode d'exploration du volume numérique, sont chargés d'informations dont la valeur appartient à cette plage.

6. Procédé selon la revendication 6, caractérisé en ce que le critère de segmentation comporte en outre la mesure (fig 4a, 4b) du gradient d'information physique des éléments dont les valeurs sont situées dans la plage, et le choix de l'élément pour lequel ce gradient est le plus élevé.

7. Procédé selon la revendication 7, caractérisé en ce que la représentation comporte la détermination des normales à la surface du volume segmenté, et en ce que ces normales sont assimilées aux directions des gradients à l'endroit des éléments de volume correspondants.

8. Procédé selon la revendication 7 où 8, caractérisé en ce que le calcul du gradient en chaque élément (8) comporte la prise en compte des éléments les plus voisins (9-14) de cet élément.

9. Procédé selon l'une quelconque des revendications 7 à 9, caractérisé en ce que le calcul du gradient en chaque éléments (8) comporte la prise en compte d'un nombre donné (T) d'éléments voisins de l'élément considéré et le choix d'un algorithme (T) de calcul de ce gradient.

**Claims**

1. Method for calculating and representing (21) viewing images of an object (4), the said object being determined, inside a digital volume (2), this digital volume consisting of memory cells of a computer, each representing one of the volume elements of a volume, these volume elements being spatially distributed according to coordinates (x,y,z), each cell storing at least one physical information of which the value is representative of a physical property of the corresponding volume element of this object, the method comprising the following stages:
   - segmentation (Fig. 3a) of the digital volume by digitally processing the values of the physical information of the memory cells representative of a specific object in the volume;
   - display (21) of the viewing image of this segmented object from a given viewing point (P), the segmentation being effected by a memory exploration method, the memory cells corresponding to volume elements being addressed in succession along an observation say which starts from the viewing point P and which is contained in an observation angle, characterized in that
   - during the segmentation each element of the segmented volume is provided with a parameter (x,y) representative of the observation ray, which reaches this volume element, while the digital volume is being explored.

2. Method according to Claim 2, characterized in that the observation angle is zero, to give an axonometric representation of the segmented object, and that the parameter of each element represents the coordinates of the intersection with a reference plane (x,y) of a ray which reaches this object.

3. Method according to Claim 2, characterized in that the apex (Q) of the observation angle is situated in the assumed position of a viewing point to provide a representation of the segmented object in perspective.

4. Method according to any one of Claims 1-4, characterized in that the segmentation is effected by selecting segmentation criteria (Fig. 3b) depending for each volume element on the local parameter ($x_i$, $y_i$, T) attributed to this volume element.

5. Method according to any one of Claims 1-5, characterized in that the segmentation criterion includes the operation of determining a range (5,6) of values of the physical informations and the selection of the volume elements which, in a phase ($D_i$) of the digital volume exploration method, are charged with informations of which the value is included in the said range.

6. Method according to Claim 6, characterized in that the segmentation criterion also includes the measurement (Fig. 4a,4b) of the physical information gradient of the elements of which the values are included in the range, and the choice of the element for which this gradient is the highest.

7. Method according to Claim 7, characterized in that the representation includes the operation of determining the lines normal to the surface of the segmented volume and that these normal lines are assimilated to the directions which the radients take where the corresponding volume elements are situated.

8. Method according to Claim 7 or 8, characterized in that the calculation of the gradient in each element (8) takes into account the nearest elements (9-14) of this element.

9. Method according to any one of Claims 7-9, characterized in that the calculation of the gradient in each element (8) takes into account a given number (T) of elements adjacent to the element concerned and the choice of an algorithm (T) for the calculation of this gradient.

**Patentansprüche**

1. Verfahren zur Sichtbarmachung (21) Von Ansichten eines Objektes (4) in Form von Bildern, wobei das genannte Objekt innerhalb eines digitalen Volumens (2) festgelegt ist und, wobei das Volumen aus jeweils die Volumenelemente eines Volumens enthaltenden Speicherzellen eines Computers besteht und wobei diese Volumenelemente gemäß den Koordinaten (x, y und z) räumlich verteilt sind, wobei ferner jede Zelle mindestens eine physikalishe Information speichert, deren Wert eine physikalische Eigenschaft des diesem Objekt entsprechenden Volumenelements enthält, und wobei das Verfahren folgende Schritte umfaßt:
- Segmentierung (Figur 3a) des digitalen Volumens durch digitale Behandlung der Werte der physikalische Information der Speicherzellen, die im Volumen ein spezifisches Objekt darstellen,
- Sichtbarmachung (21) des Bildes einer Ansicht dieses segmentierten Objektes ausgehend von einem vorbestimmten Punkt (P), wobei die Segmentierung gemäß einem Modus der Abtastung des Speichers ausgeführt wird, bei dem ausgehend vom dem Ansichtspunkt (P), der innerhalb eines Beobachtungswinkels enthalten ist, diejenigen Zellen nacheinander adressiert werden, die entlang einer Beobachtungsstrecke angeordneten Volumenelementen entsprechen, dadurch gekennzeichnet, daß
- während der Segmentierung jedes Volumenelement mit einem die Beobachtungsstrecke darstellenden Parameter ($x_1$ und $y_1$) zur Zeit der Abtastung des Volumens und unter Erreichung dieses Elementes versehen wird.

2. Verfahren nach Anspruch 2, dadurch gekennzeichnet, daß der Beobachtungswinkel gleich null ist, um eine axonometrische Darstellung des segmentierten Objektes zu erreichen und daß der Parameter jedes Elementes die Koordinate des Schneidens der Referenzebene (x und y) durch eine Beobachtungsstrecke darstellt, die diese Element erreicht.

3. Verfahren nach Anspruch 2, dadurch gekennzeichnet, daß die Spitze (Q) des Beobachtungswinkels am Ort eines fiktiven Punkts angeordnet ist, um eine perspektivische Darstellung des segmentierten Objektes zu erzielen.

4. Verfahren nach einem der vorhergehenden Ansprüche 1 bis 4, dadurch gekennzeichnet, daß die Segmentierung dadurch bewirkt wird, daß man Kriterien (Figur 3b) der Segmentierung in Abhängigkeit von dem diesem Volumenelement zugewiesenen Ortsparameter ($x_i$, $y_i$ und T) für jedes Volumenelement auswählt.

5. Verfahren nach einem der vorhergehenden Ansprüche 1 bis 5, dadurch gekennzeichnet, daß das Segmentierungskriterium die Feststellung eines Bereiches (5 und 6) der Werte der physikalischen Informationen und die Auswahl von Volumenlmenten umfaßt, die in einer Phase

(D$_1$) des Modus der Abtastung des digitalen Volumens mit Informationen beladen sind, deren Wert dem Bereich gehört.

6. Verfahren nach Anspruch 6, dadurch gekennzeichnet, daß das Segmentierungskriterium weiterhin die Messung (Figur 4a und 4b) des physikalischen Informationsgradienten der Elemente, deren Werte innerhalb des Bereiches liegen, und die Auswahl des Elementes umfaßt, bei dem der Gradient am größten ist.

7. Verfahren nach Anspruch 7, dadurch gekennzeichnet, daß die Sichtbarmachung die Feststellung einer Senkrechten zu der Oberfläche des segmentierten Volumens umfaßt, und daß diese Senkrechten den Richtungen der Gradienten am Ort der entsprechenden Volumenelemente angeglichen werden.

8. Verfahren nach Anspruch 7 oder nach Anspruch 8, dadurch gekennzeichnet, daß die Berechnung des Gradienten in jedem Element (8) die Berücksichtigung der am nächsten liegenden Elemente (9 bis 14) dieses Elementes umfaßt.

9. Verfahren nach einem der vorhergehenden Ansprüche 7 bis 9, dadurch gekennzeichnet, daß die Berechnung des Gradienten in jedem Element (8) die Berücksichtigung einer vorbestimmten Anzahl (T) von den in Betracht gezogenen Elementen und die Auswahl eines Algorithmus (T) für die Berechnung des Gradienten umfaßt.

FIG_1

FIG_2

FIG_3a

FIG_3b

FIG_4a

FIG_4b

FIG_5